# DEMANDE DE BREVET EUROPEEN

(11) **EP 2 860 682 A1**
(43) Date de publication de la demande: **15.04.2015**
(21) Numéro de dépôt: 13306401.4
(22) Date de dépôt: 11.10.2013
(51) Int. Cl.: G06Q 20/32

(54) **Procédé de gestion de transactions NFC et terminal correspondant**

(71) Demandeur: Gemalto SA, 92190 Meudon (FR)
(72) Inventeur: Brun, M. Alain, 13705 La Ciotat (FR)

(57) **Abrégé**

L'invention concerne notamment un procédé de gestion de transactions NFC entre un terminal d'usager portable (10) et un lecteur (11), le procédé consistant à interdire une transaction NFC entre le terminal (10) et le lecteur (11) si la zone géographique où se situe le terminal (10) est une zone répertoriée dans une liste (13, 13') définissant les endroits où la transaction NFC doit être interdite.

## Description

Le domaine de l'invention est celui des télécommunications et concerne notamment les transactions de type NFC pouvant être effectuées entre un terminal d'usager portable et un lecteur.

Un terminal d'usager portable est typiquement un téléphone, une tablette ou un smartphone. Un terminal selon l'invention est apte à établir une communication de type NFC avec un lecteur, par exemple pour effectuer un paiement chez un marchand, passer un portillon dans un métro,... Le terminal renferme pour cela une application de paiement comprenant des identifiants bancaires de son titulaire, typiquement son nom, son numéro de compte bancaire, une date d'expiration et éventuellement un cryptogramme encore appelé CVV (« Card Verification Value » en anglais - « Valeur de vérification de carte » en français) ou CVC (« Card Validation Code » en anglais - « Code de validation de carte » en français).

Un inconvénient connu des terminaux NFC est qu'il est possible à une personne mal intentionnée, équipée d'un lecteur NFC, de s'approcher d'un porteur d'un terminal NFC pour y lire des données, voire effectuer une transaction, à l'insu du porteur du terminal NFC. Typiquement, la personne mal intentionnée transporte le lecteur dans un sac et l'approche suffisamment du porteur du terminal pour qu'une communication NFC s'établisse entre le lecteur et le terminal. Des données telles que le nom du titulaire du terminal, son numéro de carte bancaire et la date d'expiration peuvent ainsi être subtilisées par la personne mal intentionnée. De plus, une transaction bancaire peut être réalisée à l'insu du porteur du terminal.

Différentes solutions peuvent être mises en oeuvre pour éviter une telle lecture frauduleuse :
- Le porteur du terminal peut désactiver la fonctionnalité NFC lorsqu'il ne souhaite pas effectuer de transaction. Cette solution est cependant inadéquate car le porteur du terminal peut oublier de désactiver cette fonctionnalité NFC ;
- Il peut être demandé au porteur du terminal d'entrer un code PIN entre deux « taps » successifs avec un lecteur. Cette solution n'est pas non plus très pratique à mettre en oeuvre, l'objectif du NFC étant de pouvoir effectuer des transactions rapidement (selon le concept « tap and go »), sans justement avoir à entrer de code PIN ;
- Une touche dédiée peut être prévue sur le terminal, dont l'appui active la fonctionnalité NFC. Cette solution nécessite cependant de prévoir cette touche dédiée et n'est pas compatible avec le côté convivial du « tap and go ».

La présente invention a notamment pour objectif de remédier à ces inconvénients.

Plus précisément, un des objectifs de l'invention est de fournir un procédé permettant d'éviter des transactions NFC frauduleuses effectuées à l'insu du porteur d'un terminal NFC.

Cet objectif, ainsi que d'autres qui apparaitront par la suite, est atteint grâce à un procédé de gestion de transactions NFC entre un terminal d'usager portable et un lecteur, ce procédé consistant à interdire une transaction NFC entre le terminal et le lecteur si la zone géographique où se situe le terminal est une zone répertoriée dans une liste définissant les endroits où la transaction NFC doit être interdite.

La liste peut être comprise dans le terminal ou au niveau d'un réseau avec lequel communique le terminal.

Avantageusement, la liste est téléchargeable du réseau dans le terminal.

La zone géographique dans laquelle est situé le terminal est préférentiellement connue par géo-localisation du terminal.

La zone géographique dans laquelle est situé le terminal est avantageusement connue par localisation Wifi.

L'invention concerne également un terminal d'usager portable apte à communiquer via NFC avec un lecteur, ce terminal comprenant une application apte à interdire une transaction NFC avec un lecteur si la zone géographique où se situe le terminal est une zone répertoriée dans une liste définissant les endroits où la transaction NFC doit être interdite.

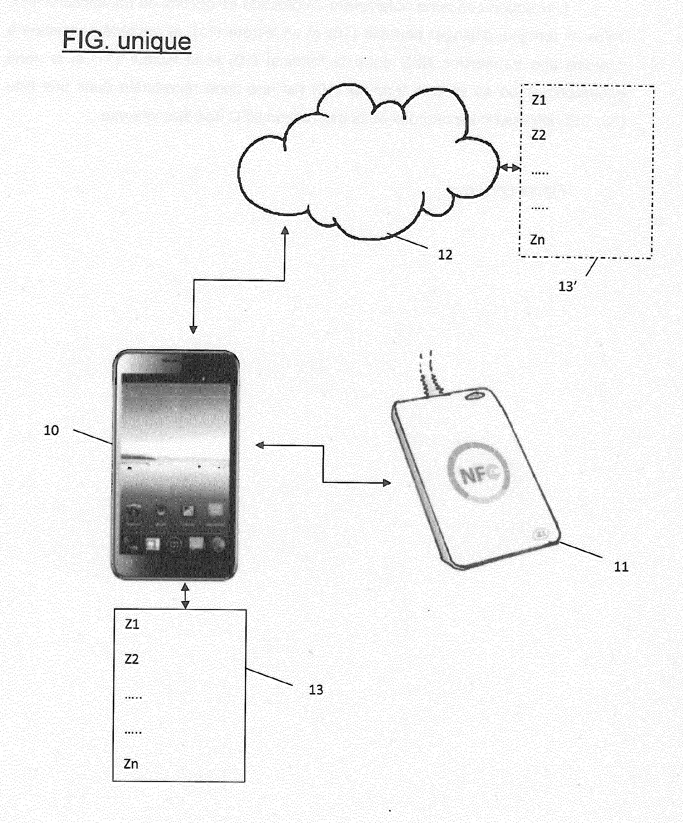

D'autres caractéristiques et avantages de l'invention apparaîtront à la lecture de la description suivante d'un mode de mise en oeuvre de l'invention, donné à titre illustratif et non limitatif, et de la figure unique annexée représentant un système mettant en oeuvre le procédé selon la présente invention.

Le système comprend un terminal d'usager portable 10 et un lecteur 11. Le terminal 10 et le lecteur 11 peuvent communiquer par NFC. Dans le cadre de la présente invention, le lecteur 11 appartient à une personne mal intentionnée qui en approchant son lecteur 11 du terminal 10, peut établir une communication NFC pour lire dans le terminal 10 des données confidentielles telles que celles énoncées dans l'exposé de l'état de la technique ou pour effectuer une transaction bancaire comme celle que l'utilisateur du terminal 10 aurait effectuée auprès d'un commerçant.

Le système comprend également un réseau télécom 12, par exemple un réseau GSM ou LTE, avec lequel le terminal 10 peut entrer en communication.

Le procédé selon l'invention consiste à interdire une transaction NFC entre le terminal 10 et le lecteur 11 si la zone géographique où se situe le terminal 10 est une zone répertoriée dans une liste 13 définissant les endroits où la transaction NFC doit être interdite.

La liste 13 est, dans un premier mode de mise en oeuvre préférentiel, comprise dans le terminal 10, par exemple dans sa carte Sim ou son UICC. Elle comprend des zones Z1 à Zn dans lesquelles aucune transaction NFC ne doit être autorisée, tout du moins sans autorisation expresse du titulaire du terminal 10.

Les zones Z1 à Zn correspondent pas exemple à des endroits de passage fréquents tels que des couloirs de métro, des stations de métro ou des lignes de métro, de bus ou de train. Ces endroits sont ceux où l'utilisateur ne devrait en principe pas effectuer de transaction NFC. Effectuer une transaction NFC entre deux stations de métro est par nature suspect. Si une tentative d'une transaction NFC est néanmoins détectée, l'utilisateur en est averti, par exemple par l'émission d'un signal sonore par son terminal 10.

On entend par autorisation expresse d'une transaction NFC par l'utilisateur une action volontaire de sa part telle que celle consistant à appuyer sur une touche de son terminal ou à composer son code PIN validant la transaction NFC. Ceci peut être requis de la part de l'utilisateur s'il achète par exemple de la nourriture ou une boisson dans un train.

Les zones Z1 à Zn peuvent être déterminées par différents moyens : par géo-localisation satellite (GPS), par localisation Wifi ou en détectant à quelle station de base (dans un réseau cellulaire) est connecté le terminal 10 (lecture du fichier Loci). La géo-localisation par GPS ne fonctionne pas lorsque l'utilisateur est dans un bâtiment ou sous terre (par exemple dans le métro) mais des balises GPS terrestres peuvent être utilisées pour connaître sa position géographique

L'interdiction d'établissement d'une connexion NFC peut être décidée au niveau du réseau 12 sur la base de discordances entre la position géographique du terminal 10 et la nature de la transaction NFC si celle-ci consiste en une transaction EMV. En effet, lors d'une transaction EMV, un identifiant du marchand est transmis du lecteur 11 au terminal 10. Si cet identifiant ne correspond pas à un lieu où ce marchand devrait normalement se trouver (par exemple un achat de tickets de métro alors que le terminal est dans un train à grande vitesse), la transaction NFC est prohibée. Pour cela le terminal 10 doit être connecté au réseau lors de l'établissement de la transaction NFC.

Il est également possible de limiter le montant maximum d'une transaction NFC en fonction de la localisation géographique du terminal 10. Un acheteur présent sur un marché aux légumes n'aura pas les mêmes dépenses que s'il est dans une bijouterie. A chaque zone Z1 à Zn peut donc être associé un montant maximum de transaction.

La liste 13 présente dans le terminal 10 peut y être chargée lors d'une phase de personnalisation en usine ou alors par OTA (« Over The Air » en anglais). Des mises à jour de cette liste peuvent également être effectuées, lors de campagnes de mises à jour.

Une liste de référence 13' est à cet égard présente au niveau du réseau 12 et peut être téléchargée dans le terminal 10 lorsque celui-ci y est connecté (ou pour une mise à jour).

Les usages actuels consistent en ce que toute transaction NFC d'un montant inférieur à 20 Euros ne nécessite pas la saisie d'un code PIN. L'invention permet de limiter ce seuil, à dix, cinq, voire zéro Euros si la localisation du terminal correspond à une zone où il existe un risque pour l'utilisateur d'établir une connexion NFC avec un lecteur potentiellement malveillant.

L'invention se présente sous la forme d'une application pouvant être chargée dans l'élément de sécurité du terminal 10, par exemple dans sa carte Sim ou UICC.

L'interdiction totale d'une transaction NFC peut consister, au niveau du terminal 10, à simplement désactiver la fonctionnalité NFC du terminal 10 lorsque celui-ci pénètre dans une zone où le risque d'une transaction NFC frauduleuse est important. Il est également possible de désactiver l'application bancaire plutôt que de désactiver la fonctionnalité NFC (afin de conserver la fonction de lecture d'un tag et le P2P).

L'invention concerne également un terminal 10 comprenant une application apte à interdire une transaction NFC avec un lecteur si la zone où se situe ce terminal 10 est une zone géographique répertoriée dans la liste 13 définissant les endroits où la transaction NFC doit être interdite.

## Revendications

1. Procédé de gestion de transactions NFC entre un terminal d'usager portable (10) et un lecteur (11), **caractérisé en ce qu'il** consiste à interdire une transaction NFC entre ledit terminal (10) et ledit lecteur (11) si la zone géographique où se situe ledit terminal (10) est une zone répertoriée dans une liste (13, 13') définissant les endroits où ladite transaction NFC doit être interdite.

2. Procédé selon la revendication 1, **caractérisé en ce que** ladite liste (13) est comprise dans ledit terminal (10).

3. Procédé selon la revendication 1, **caractérisé en ce que** ladite liste (13') est comprise au niveau d'un réseau (12) avec lequel communique ledit terminal (10).

4. Procédé selon la revendication 3, **caractérisé en ce que** ladite liste (13') est téléchargeable dudit réseau (12) dans ledit terminal (10).

5. Procédé selon l'une des revendications 1 à 4, **caractérisé en ce que** la zone géographique dans laquelle est situé ledit terminal (10) est connue par géo-localisation dudit terminal (10).

6. Procédé selon l'une des revendications 1 à 4, **caractérisé en ce que** la zone géographique dans laquelle est situé ledit terminal (10) est connue par localisation Wifi.

7. Terminal d'usager portable (10) apte à communiquer via NFC avec un lecteur (11), **caractérisé en ce qu'il** comprend une application apte à interdire une transaction NFC avec ledit lecteur (11) si la zone géographique où se situe ledit terminal (10) est une zone répertoriée dans une liste (13, 13') définissant les endroits où ladite transaction NFC doit être interdite.
